# EUROPEAN PATENT APPLICATION

(11) **EP 1 396 783 A2**
(43) Date of publication of application: **10.03.2004**
(21) Application number: 03255541.9
(22) Date of filing: 05.09.2003
(51) Int. Cl.: G06F 3/12

(54) **Wireless printing apparatus with communication error reporting**

(30) Priority: 06.09.2002 KR 2002053816
(71) Applicant: SAMSUNG ELECTRONICS CO., LTD., Suwon-City, Kyungki-do (KR)
(72) Inventor: Kim, Jin-hyung, Suwon-si, Gyeonggi-do (KR)
(74) Representative: Geary, Stuart Lloyd

(57) **Abstract**

A method, an apparatus, and a machine-readable medium for informing a user about a print error of a wireless printer in a wireless network are provided. The method comprises determining whether data to be printed are not received by the wireless printer server for more than a predetermined period during the wireless printing operation, requesting and receiving wireless communication information on the wireless printer server when it is determined that the data to be printed is not received by the wireless printer server for more than the predetermined period, determining whether a link state or a link quality of a wireless communication is good by analyzing the received wireless communication information, generating print error information regarding the communication between the wireless printer server and a host when it is determined that the link state or the link quality of the wireless communication is bad, and reporting the print error information to the user.

## Description

The present invention relates to and printing apparatus comprising a wireless communication interface including means for monitoring link quality during communication.

Wireless communication, be it WLAN (wireless LAN), Bluetooth or IrDA, between electronic devices is becoming more and more popular.

Wireless LANs can be arranged in two ways. In one arrangement, all of the nodes, e.g. computers, have a wireless LAN cards and communicates directly with each other. In the other arrangement, an access point, which is typically connected to a wired network, is provides and the wireless terminal nodes communicate with each other via the wireless access point.

Printers can be added to a wireless network using a wireless print server or providing wireless connectivity in the printers themselves. However, conventional wireless printing methods do not include the outputting of error information when communication errors occur during printing operations.

A printing apparatus according to the present invention is characterised by interruption detection means for detecting an interruption in a print data signal being received by the wireless communication interface to produce an interruption signal, link analysing means responsive to an interruption signal from the interruption detection means to request link quality information from the wireless communication interface for the signal to which the interruption signal relates and output a bad link signal if the link quality does not meet a predetermined criterion, and reporting means responsive to a bad link signal from the link analysing means to report an error.

Additional aspects and preferred and option features are set forth in claims 2 to 17 appended hereto.

An embodiment of the present invention will now be described, by way of example, with reference to the accompanying drawings, in which:
Figure 1 is a flowchart illustrating a method of informing a user about an error during wireless printing;
Figure 2 is a flowchart illustrating part of the method of Figure 1 in more detail;
Figure 3 is a block diagram of a wireless printing apparatus according to the present invention; and
Figure 4 is a block diagram illustrating the communication information analysis unit shown in Figure 3.

A method according to the present invention generally includes determining whether data to be printed has not been received for more than a predetermined period, and generating and outputting print error information regarding the communication between a wireless printer server and a computer.

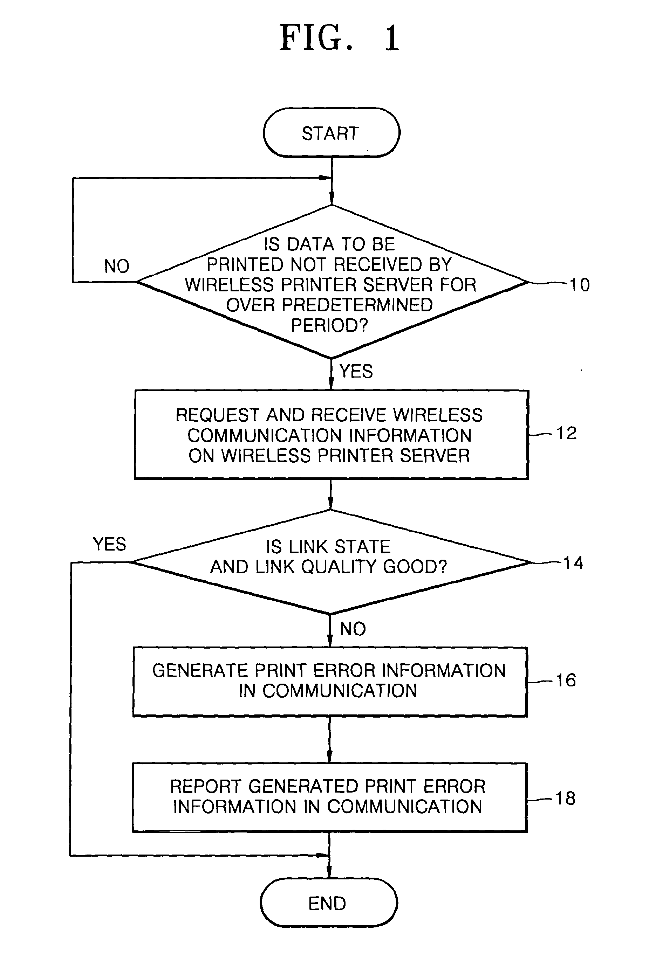

Referring to Figure 1, it is determined whether the data to be printed has not been received by the wireless print server for over a predetermined period during a wireless printing operation, in operation 10. If it is determined that data to be printed has been received by the wireless print server within the predetermined period during the wireless printing operation, operation 10 is repeated.

If it is determined that data to be printed has not been received by the wireless print server for more than the predetermined period, wireless communication information regarding the wireless print server is requested and received, in operation 12. The wireless communication information regarding the wireless print server includes link active information and link quality information that indicate the current state of the wireless network. In addition, the wireless communication information on the wireless print server may include channel information, or the identification address, e.g. the MAC address, and the IP address of the host which is transmitting the data to be printed.

After operation 12, the received wireless communication information is analyzed to determine whether the link state and the link quality of the wireless communication are good, in operation 14. If it is determined that the link state and the link quality of the wireless communication are good, the output of print error information is ended.

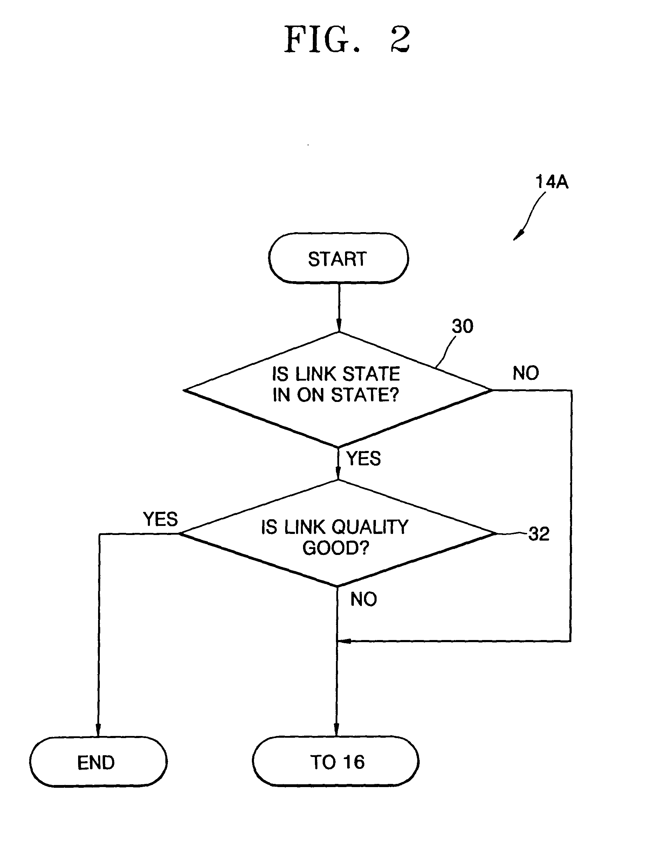

Referring to Figure 2, step 14A corresponding to step 14 in Figure 1 includes steps for determining the link state and the link quality.

It is determined whether the link state of the wireless communication is in an active state in operation 30. Here, the link state denotes the connection state between the wireless printer server and the host, which is transmitting the data to be printed. If it is determined that the link state of the wireless communication is in an inactive state, operation 16 of Figure 1 is performed.

However, if it is determined that the link state of the wireless communication is in an active state, it is determined whether the link quality is good enough for wireless communication, in operation 32. Here, the link quality denotes the quality of the received signal from the host. In addition, the quality of the communication can be obtained by evaluating the quality of the received signal using signal to noise (S/N) ratio or an error rate. The link quality can be determined with reference to the acceptable signal quality, which is obtained via experiments. If it is determined that the link quality is not good enough effective wireless communication, operation 16 is performed.

Returning to Figure 1, if it is determined that the link state or the link quality of the wireless communication is bad, print error information is generated in operation 16. In the present embodiment, the print error information includes the link state information and the link quality information on the wireless communication between the printer server and the host. In other words, the print error information may include information reporting whether the link state is in the active state or inactive state and information reporting whether the link quality is over or under a predetermined link quality. In addition, the print error information may further include the date and time when the error appeared, channel information, and the identification address, e.g. the MAC address, and the IP address and/or the fully qualified name of the host, which was tranmitting the data to be printed.

After operation 16, the print error information is reported in operation 18. Here, the print error information may be reported by displaying the information on a display screen installed in the printer or by printing the information.

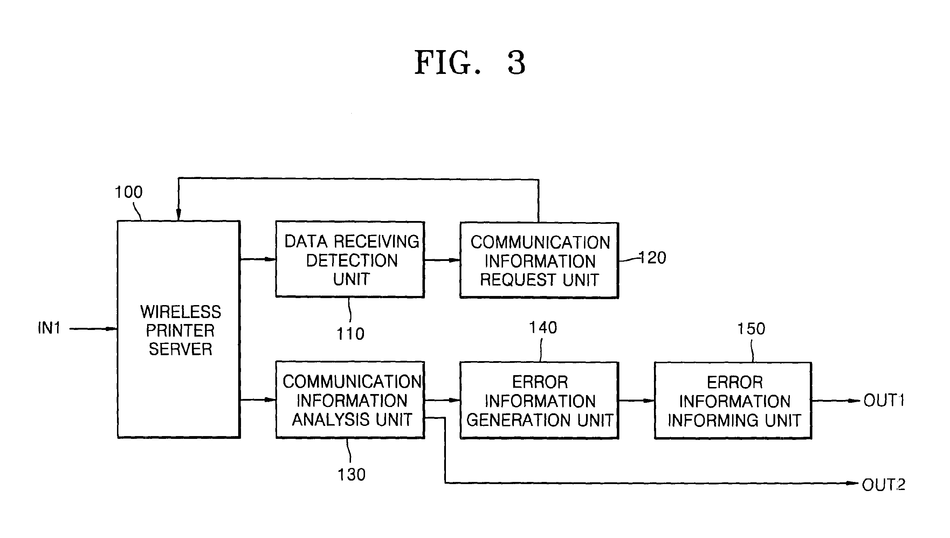

Referring to Figure 3, an apparatus according to the present invention includes a wireless print server 100, a data reception detection unit 110, a communication information request unit 120, a communication information analysis unit 130, an error information generation unit 140 and an error information informing unit 150.

In the present embodiment, the wireless print server 100 provides an interface for the wireless transfer of data to be printed to the printer from a host in a wireless network environment. For example, the wireless printer server 100 receives the data to be printed from a computer via an input terminal IN1 and outputs the data to the data receiving detection unit 110. The computer has a wireless LAN card or a wired LAN card that is connected by cables to a wireless access point to perform the wireless network communication.

The wireless print server 100 outputs the wireless communication information to the communication information analysis unit 130 according to a request signal from the communication information request unit 120.

In order to perform operation 10, the data receiving detection unit 110 detects a state whether the wireless printer server 100 does not receive the data to be printed for over a predetermined period during a wireless printing operation, and outputs a detection result. In an embodiment, the data receiving detection unit 110 including a counter (not shown) which does not operate while the wireless printer server 100 receives the data to be printed having a predetermined size. When the wireless printer server 100 stops receiving the data to be printed before the printing operation is finished, the data receiving detection unit 110 triggers the counter. When the counter has operated for over a predetermined period, the data receiving detection unit 110 determines that the reception of the data to be printed by the wireless print server 100 has stopped abnormally and outputs the detection result to the communication information request unit 120.

In order to perform operation 12, the communication information request unit 120 requests the wireless communication information on the wireless print server 100 in response to the detection result from the data receiving detection unit 110. For example, the communication information request unit 120 outputs a signal, requesting the wireless communication information, to the wireless print server 100 in response to the detection result, which is transferred from the data receiving detection unit 110.

In order to perform operation 14, the communication information analysis unit 130 receives the requested wireless communication information from the wireless print server 100 and analyzes the link state and the link quality of the communication and output an analysis result. In the present embodiment, if the communication information analysis unit 130 determines that the link state or the link quality is bad based on the wireless communication information from the wireless print server 100, the communication information analysis unit 130 outputs the analysis result to the error information generation unit 140. In the other case, the communication information analysis unit 130 outputs the analysis result through an output terminal OUT2.

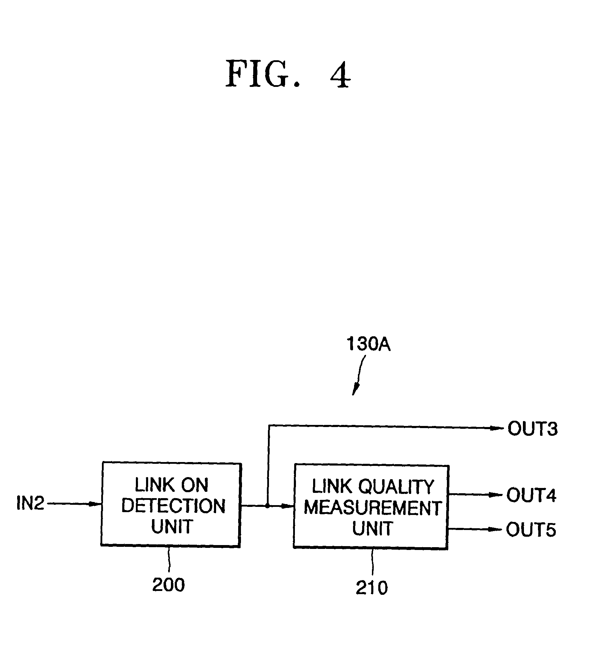

Referring to Figure 4, in another embodiment, the information analysis unit 130A includes a link active detection unit 200 and a link quality measurement unit 210.

In order to perform operation 30, the link active detection unit 200 detects whether the link state of the wireless communication is in an active state and outputs the detection result. For example, the link active detection unit 200 detects information on the link state, which is transferred from the wireless print server 100 via an input terminal IN2, to determine whether the link state is in an active state. When the link state is in an active state, the link active detection unit 200 outputs the detection result to the link quality measurement unit 210. In the other case, the detection result is output to the error information generation unit 140 via an output terminal OUT3.

In order to perform operation 32, the link quality measurement unit 210 measures the link quality with the received signal of the communication and outputs the measurement result. In this case, if the link quality is over threshold, corresponding to a received signal quality commensurate with effective communication which is experimentally obtained, it is determined that the link quality is good. In the other case, it is determined that the link quality is bad. In the present embodiment, the link quality measurement unit 210 measures the link quality in response to the detection result from the link active detection unit 200. If the link quality is less than the predetermined link quality, the measurement result is output to the error information generation unit 140 via an output terminal OUT4. In the other case, the measurement result is output through an output terminal OUT5.

Returning to Figure 3, in order to perform operation 16, the error information generation unit 140 generates the print error information based on the analysis result and outputs the generated print error information. The print error information generated by the error information generation unit 140 includes the link state information and the link quality information which are generated based on the detection result from the link on detection unit 200 and the measurement result from the link quality measurement unit 210.

In another embodiment, the print error information generated by the error information generation unit 140 further includes the date and time when the error appeared, channel information, and the identification address, e.g. the MAC address, and the IP address and/or the fully qualified name of the host, which was transferring the data to be printed. The error information generation unit 140 outputs the print error information to the error information informing unit 150.

In order to perform operation 18, the error information informing unit 150 reports the print error information. In an embodiment, the error information informing unit 150 displays the print error information on a display screen (not shown) of the printer or prints the print error information using a data printing unit (not shown). In other words, the error information informing unit 150 outputs a signal for displaying or printing the print error information, which is transferred from the error information generation unit 140 via an output terminal OUT1.

A print error due to communication errors between a wireless print server and a host computer can be promptly corrected using the method and the apparatus of the present invention.

The hardware included in the system may include memories, processors, and/or Application Specific Integrated Circuits ("ASICs"). Such memory may include a machine-readable medium on which is stored a set of instructions (i.e., software) embodying any one, or all, of the methodologies described herein. Software can reside, completely or at least partially, within this memory and/or within the processor and/or ASICs. For the purposes of this specification, the term "machine-readable medium" shall be taken to include any mechanism that provides (i.e., stores and/or transmits) information in a form readable by a machine (e.g., a computer). For example, a machine-readable medium includes read only memory ("ROM"), random access memory ("RAM"), magnetic disk storage media, optical storage media, flash memory devices, electrical, optical, acoustical, or other form of propagated signals (e.g., carrier waves, infrared signals, digital signals, etc.) etc.

## Claims

1. A printing apparatus comprising a wireless communication interface including means (100) for monitoring link quality during communication,
**characterised by**
interruption detection means (110) for detecting an interruption in a print data signal being received by the wireless communication interface to produce an interruption signal,
link analysing means (120, 130) responsive to an interruption signal from the interruption detection means (110) to request link quality information from the wireless communication interface (100) for the signal to which the interruption signal relates and output a bad link signal if the link quality does not meet a predetermined criterion and
reporting means (140, 150) responsive to a bad link signal from the link analysing means (120, 130) to report an error.

2. A method of informing a user about a print error of a printer that performs a wireless printing operation using a wireless printer server, comprising:
(a) determining whether data to be printed are not received by the wireless printer server for more than a predetermined period during the wireless printing operation;
(b) requesting and receiving wireless communication information on the wireless printer server upon determining that the data to be printed are not received by the wireless printer server for more than the predetermined period;
(c) determining whether a link state or a link quality of a wireless communication is good by analyzing the received wireless communication information;
(d) generating print error information regarding the communication between the wireless printer server and a host when the link state or the link quality of the wireless communication is bad; and
(e) reporting the print error information to the user.

3. The method of claim 2, wherein (c) comprises:
(c1) determining whether the link state of the wireless communication is in an on state after (b); and
(c2) determining whether the link quality is in good condition to smoothly perform the wireless communication when the link state of the wireless communication is in the on state,
wherein if the link state of the wireless communication is in an off state in (c1) or the link quality is in a bad condition to smoothly perform the wireless communication in (c2), (d) is performed.

4. The method of claim 2, wherein the link state information and the link quality information on the wireless communication are generated as the print error information in (d).

5. The method of claim 4, wherein date and time when the print error appeared, channel information, or identification address and Internet address of the host, which transfers the data to be printed, are further generated as the print error information in (d).

6. The method of claim 2, wherein the print error information is displayed on a display screen of the printer or is printed in (e).

7. An apparatus for informing a user about a print error of a printer that performs a wireless printing operation using a wireless printer server, the apparatus comprising:
a data receiving detection unit to detect whether data to be printed are not received by the wireless printer server for more than a predetermined period during the wireless printing operation and to output a detection result;
a communication information request unit to request the wireless communication information on the wireless printer server in response to the detection result and to output a requested result;
a communication information analysis unit to analyze a link state or a link quality of the wireless communication by receiving the wireless communication information from the wireless printer server and to output an analysis result;
an error information generation unit to generate print error information based on the analysis result and to output the print error information; and
an error information informing unit to report the print error information to the user.

8. The apparatus of claim 7, wherein the communication information analysis unit comprises:
a link on detection unit to detect whether the link state of the wireless communication is in an on state and to output a detection result; and
a link quality measurement unit to measure the link quality with a sensitivity of communication between the wireless server printer and a host in response to the detection result and to output a measurement result,
wherein the error information generation unit generates the print error information based on the detection result or the measurement result.

9. The apparatus of claim 7, wherein the error information generation unit generates the link state information and the link quality information on the wireless communication as the print error information.

10. The apparatus of claim 9, wherein the error information generation unit further generates a print date and time when the print error appeared, channel information, or identification address and Internet address of the host, which transfers the data to be printed.

11. The apparatus of claim 7, wherein the error information informing unit displays the print error information on a display screen of the printer or prints the print error information.

12. A method, comprising:
determining, during a printing operation, whether data to be printed on a wireless network printer is not received for more than a predetermined period of time; and
generating and reporting print error information regarding a communication between a wireless network printer server and a computer when data is not received for more than the predetermined period of time.

13. The method of claim 12, further comprising:
determining whether a link quality and a link state of the communication are both good,
wherein the print error information is not generated and transmitted when the link quality and the link state are both good.

14. The method of claim 13, wherein the link quality denotes a sensitivity of the communication, which can be measured using a signal-to-noise (S/N) ratio or an error rate.

15. A machine-readable medium that provides instructions, which, when executed by a machine, cause the machine to perform operations comprising:
determining, during a printing operation, whether data to be printed on a wireless network printer is not received for more than a predetermined period of time; and
generating and reporting print error information regarding a communication between a wireless network printer server and a computer when data is not received for more than the predetermined period of time.

16. The machine-readable medium of claim 15, wherein the instructions cause the machine to perform operations further comprising:
determining whether a link quality and a link state of the communication are both good,
wherein the print error information is not generated and transmitted when the link quality and the link state are both good.

17. The machine-readable medium of claim 16, wherein the link quality denotes a sensitivity of the communication, which can be measured using a signal-to-noise (S/N) ratio or an error rate.
